# EUROPEAN PATENT APPLICATION

(11) **EP 4 471 470 A1**
(43) Date of publication of application: **04.12.2024**
(21) Application number: 23746494.6
(22) Date of filing: 30.01.2023
(51) Int. Cl.: G02B 6/00, G02B 27/01, G02B 6/124

(54) **STACKED GRATING AND AR DISPLAY APPARATUS**

(30) Priority: 30.01.2022 CN 202210114535
(71) Applicant: Zhuhai Mojie Technology Co., Ltd., Zhuhai, Guangdong 519085 (CN)
(72) Inventor: SHAO, Chendi, Zhuhai, Guangdong 519085 (CN); LAN, Fuyang, Zhuhai, Guangdong 519085 (CN); ZHAO, Jin, Zhuhai, Guangdong 519085 (CN)
(74) Representative: Agca Kizil, Tugce
(86) International application number: PCT/CN2023/073889
(87) International publication number: WO 2023/143617

(57) **Abstract**

A stacked grating and an AR display device are provided. The stacked grating includes at least two grating layers stacked from bottom to top sequentially. Grating grooves are arranged in each of the grating layers. An offset distance exists between the grating grooves in each two adjacent ones of the grating layers, and all the offset distances are distributed periodically from bottom to top. Because at least two grating layers are sequentially stacked from bottom to top and all the offset distances are distributed periodically from bottom to top, the stacked grating is equivalent to a bulk grating, and the transmission/reflection selectivity of grating diffraction is improved, thus reducing privacy disclosure and increasing the energy utilization rate.

## Description

### Technical Field

The present disclosure relates to the technical field of gratings, in particular to a stacked grating and an AR display device.

### Background Art

In the fields of augmented reality (AR) and mixed reality (MR), compared with Bird Bath (BB, semi-reflective and semi-transmissive), insect eye (off-axis reflective), and freeform prism and other display solutions, the optical waveguide solution is thinner and lighter and has a larger eye box, so it has a broader application prospect. In the fields of optical waveguide solutions, compared with an array optical waveguide using partial transflective film, the production and preparation process of the diffractive optical waveguide is less difficult, and there is no grid-like dark stripes when realizing two-dimensional pupil expansion (exit pupil expansion in two dimensions). Therefore, the diffractive optical waveguides are more popular.

Couple-in and Couple-out are the basic functions of the diffractive optical waveguides, which are realized by a coupling-in region and a coupling-out region, and the diffractive optical waveguides may also be provided with one or more intermediate partitions or deflecting regions. The coupling-in region of the diffractive waveguide can convert a free-space light beam (projected from a light engine to the optical waveguide) into a light beam that can be transmitted in total reflection in the optical waveguide substrate. The coupling-out region of the diffractive waveguide performs a reversed process, converting part of the light beam transmitted in the form of total reflection into a free-space light beam which can be received by the human eyes. The deflecting region (when present) enables part of the light beam transmitted in the form of total reflection to change its transmission direction. Thus, it continues to be transmitted in the form of total reflection in the new direction.

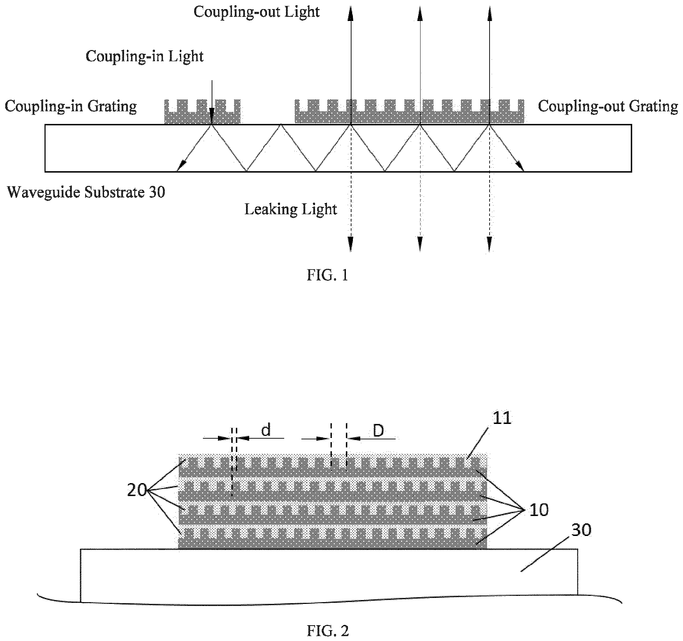

As shown in FIG. 1, the diffraction property of surface relief gratings, as plane gratings, determines the co-presence of transmissive couple-out and reflective couple-out of light passing through coupling-out gratings. However, human eyes can only observe light on one side, and light coupled out (leaking) on the other side may lead to privacy disclosure, which also indicates a low diffraction efficiency, resulting in a low energy utilization rate of the whole diffractive optical waveguide.

Therefore, existing techniques need to be improved and developed.

### Summary of the Invention

The present disclosure is directed to a stacked grating and an AR display device to solve the problem of a low energy utilization rate of gratings in the related art.

In one aspect, a stacked grating is provided which includes at least two grating layers stacked from bottom to top sequentially. A plurality of grating grooves is arranged in each of the grating layers. An offset distance exists between the grating grooves in each two adjacent ones of the grating layers, and all the offset distances are distributed periodically from bottom to top.

In some embodiments, a distance between each two adjacent ones of the grating grooves is a grating period of the two grating grooves in an arrangement direction, and the grating period is 200 nm-1000 nm.

In some embodiments, the grating layers are one-dimensional grating layers, and the offset distance is 1-99% of the grating period; or the grating layers are two-dimensional grating layers, and the offset distance comprises an offset distance in a first arrangement direction and an offset distance in a second arrangement direction; the offset distance in the first arrangement direction is 1-99% of the grating period; the offset distance in the second arrangement direction is 1-99% of the grating period.

In some embodiments, the grating grooves between each two adjacent ones of the grating layers are filled with a connecting layer, wherein refractive indexes of the grating layers are greater than refractive indexes of the connecting layers.

In some embodiments, the refractive indexes of the grating layers are 1.5-2.4, and the refractive indexes of the connecting layers are 1-1.49.

In some embodiments, the refractive indexes of the respective grating layers are not all the same; and/or, duty cycles of the grating layers are not all the same; and/or, depths of the grating grooves in the grating layers are not all the same; and/or, the refractive indexes of the connecting layers are not all the same.

In some embodiments, the bottommost one of the grating layers is connected with a waveguide substrate; and/or, the topmost or bottommost one of the grating layers is connected with a film layer; and/or, the grating layers comprise one or more of straight-groove grating layers, slant grating layers, blazed grating layers, step grating layers and curved grating layers; and/or, each of the grating layers has a thickness of 20nm-1000nm.

In some embodiments, the waveguide substrate comprises at least one of a glass waveguide substrate, a resin waveguide substrate, a plastic waveguide substrate, and a transparent ceramic waveguide.

In some embodiments, the film layer comprises a dielectric film and/or a metal film, the dielectric film is a single-layer dielectric film or a multi-layer dielectric film, and the metal film is a single-layer metal film or a multi-layer metal film.

In another aspect, an AR display device is provided which includes an optical engine, at least one layer of optical waveguide located on a light emitting direction of the optical engine, and the stacked grating as described above. The stacked grating is arranged on the optical waveguide.

According to the technical solutions of embodiments of the present disclosure, at least two grating layers are sequentially stacked from bottom to top and all the offset distances are distributed periodically from bottom to top, the stacked grating is equivalent to a bulk grating, and the transmission/reflection selectivity of grating diffraction is improved, thus reducing privacy disclosure and increasing the energy utilization rate.

### Brief Description of the Drawings

FIG. 1 is a schematic diagram illustrating a grating in the related art.
FIG. 2 is a schematic diagram illustrating a stacked grating according to one embodiment of the present disclosure.
FIG. 3 is a schematic diagram illustrating a straight-groove grating layer according to one embodiment of the present disclosure.
FIG. 4 is a schematic diagram illustrating a slant grating layer according to one embodiment of the present disclosure.
FIG. 5 is a schematic diagram illustrating a blazed grating layer according to one embodiment of the present disclosure.
FIG. 6 is a schematic diagram illustrating a step grating layer according to one embodiment of the present disclosure.
FIG. 7 is a schematic diagram illustrating a curved grating layer according to one embodiment of the present disclosure.
FIG. 8 is a schematic diagram illustrating a two-dimensional grating layer according to one embodiment of the present disclosure.

### Reference Numerals:

10, grating layer; 11, grating groove; 20, connecting layer; 30, waveguide substrate.

### Detailed Description of Embodiments

To better clarify the purposes, technical solutions and advantages of the disclosure, the disclosure is described in further detail below with reference to the accompanying drawings and embodiments. It should be understood that the specific embodiments described here are merely used for explaining the disclosure and are not intended to limit the disclosure.

It should be noted that when one element is referred to as being "fixed to" or "arranged on" the other element, it may be directly or indirectly located on the other element. When one element is referred to as being "connected to" the other element, it may be directly or indirectly connected to the other element.

It should also be noted that identical or similar reference signs in the accompanying drawings of the embodiments of the disclosure correspond to identical or similar components. In the description of the disclosure, it should be understood that terms such as "upper", "lower", "left" and "right, if any, are used to indicate directional or positional relationships based on the accompanying drawings merely for facilitating and simplifying the description of the disclosure, and do not indicate or imply that devices or elements referred to must be in a specific direction or be configured and operated in a specific direction. Therefore, the terms for describing positional relationships in the accompanying drawings are merely used for illustrative description and should not be construed as limitations of the patent. Those ordinarily skilled in the art can appreciate the specific meanings of these terms as the case may be. Referring to FIGS. 1-7, the disclosure provides some embodiments of a stacked grating.

As shown in FIG. 2, the stacked grating provided by the disclosure comprises at least two grating layers 10 stacked from bottom to top sequentially. A plurality of grating grooves 11 is formed in each of the grating layers 10.

An offset distance exists between the grating grooves 11 in each two adjacent ones of the grating layers 10, and all the offset distances are distributed periodically from bottom to top.

It should be noted that all the grating grooves 11 in each grating layer 10 are formed in one side of the grating layer 10, and openings of the grating grooves 11 in all the grating layers 10 are in a same direction. The offset distance refers to the distance between inner walls of the grating grooves 11 of each two adjacent ones of the grating layers 10 in a horizontal direction, and "all the offset distances are distributed periodically" means that the offset distances are repetitive according to a rule from bottom to top. For example, the offset distance between the grating grooves 11 in a first grating layer and the grating grooves 11 in a second grating layer is d, the positions of the grating grooves 11 in a third grating layer in the horizontal direction are the same as the positions of the grating grooves 11 in the first grating layer in the horizontal direction, and the offset distance between the grating grooves 11 in the third grating layer and the grating grooves 11 in a fourth grating layer is d, that is to say, the grating grooves 11 in the first grating layer and the grating grooves 11 in the second grating layer form a repetitive unit, the grating grooves 11 in the third grating layer and the grating grooves 11 in a fourth grating layer form another repetitive unit, and the offset distances between the grating grooves 11 in the two repetitive units are distributed in the same way.

Specifically, because at least two grating layers 10 are sequentially stacked from bottom to top and all the offset distances are distributed periodically from bottom to top, the stacked grating is equivalent to a bulk grating, and the transmission/reflection selectivity of grating diffraction is improved, thus reducing privacy disclosure and increasing the energy utilization rate. In addition, the increase in coupling-out light energy leads to an improvement of the viewing brightness or a reduction of energy consumption of an optical engine under the same brightness condition.

In addition, the stacked grating provided by the disclosure may be used as a holographic bulk grating, which is implemented not by holographic exposure (for example, by using photosensitive materials or liquid crystal-related materials). Gratings prepared by holographic exposure can be divided into bulk gratings and plane gratings according to the Stokes parameter, where is the wavelength of a recorded beam, H is the total thickness, is the refractive index of a recording medium, and is the grating period. When , the grating is a bulk grating. At present, the bulk grating is typically prepared from silver halide and is unsatisfying in environmental stability. Compared with the holographic bulk gratings prepared by holographic exposure, the stacked grating provided by the disclosure has high stability in different environments and can be produced in mass more easily; and the stacked grating has high reliability, thus expanding the application range of diffractive optical waveguides.

It should be emphasized that, because grating parameters of the grating layers 10 can be adjusted, the design freedom of the stacked grating is improved, and the uniformity of coupling-out light energy of optical waveguides can be improved by adjusting the grating parameters of the grating layers 10.

In one preferred implementation of the embodiments of the disclosure, as shown in FIG. 2, the distance between each two adjacent ones of the grating grooves 11 is a grating period of the two grating grooves in an arrangement direction, and the grating period is 200 nm-1000 nm.

Specifically, as shown in FIG. 2, the grating grooves 11 in the grating layers 10 have a grating period D, which is the distance between two adjacent grating grooves 11, the distance between two adjacent grating grooves 11 may be represented by the distance between an inner wall of one grating groove 11 and a corresponding inner wall of the adjacent grating groove 11, and the grating period can be adjusted as needed. The thickness of the grating layers 10 is 20nm-1000nm and can be adjusted as needed.

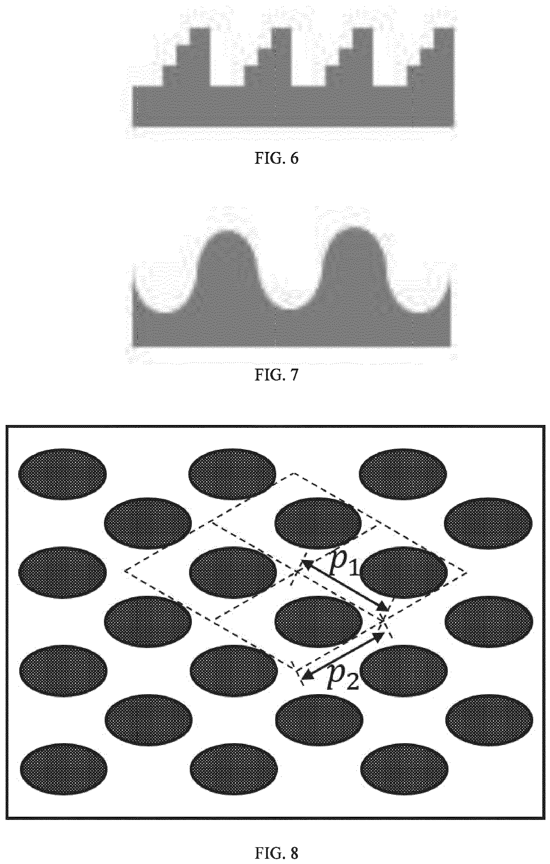

Preferably, the grating layers 10 are one-dimensional grating layers or two-dimensional grating layers. In a case where the grating layers 10 are one-dimensional grating layers, the grating grooves 11 have a grating period in one arrangement direction, that is to say, the grating grooves 11 in each one-dimensional grating layer 10 are arranged in one column. In a case where the grating layers 10 are two-dimensional grating layers, the grating grooves 11 have grating periods in two arrangement directions. For example, the grating grooves 11 in the two-dimensional grating layer are arranged in an array of columns and rows, the grating grooves 11 in each row have a grating period, and the grating grooves 11 in each column have a grating period. As shown in FIG. 8, the micro-structural units (grating grooves 11) which are arranged periodically have minimum translations (grating periods) p1 and p2 in the two arrangement directions respectively. The grating period p1 and the grating period p2 may be identical or different.

Specifically, in a case where the grating layers 10 are one-dimensional grating layers, the offset distance is 1-99% of the grating period. In a case where the grating layers 10 are two-dimensional grating layers, the offset distance comprises an offset distance in a first arrangement direction and/or an offset distance in a second arrangement direction, wherein the offset distance in the first arrangement direction is 1-99% of the grating period, and the offset distance in the second arrangement direction is 1-99% of the grating period. An angle is formed between the first arrangement direction and the second arrangement direction, and the angle may be greater than, less than or equal to 90° (as shown in FIG. 8).

It should be noted that, in a case where two-dimensional grating layers are adopted, the offset distance may exist only in the first arrangement direction (the grating grooves do not have an offset distance in the second arrangement direction, or the offset distance in the second arrangement direction is 0 or equal to one grating period); or, the grating grooves may have an offset distance only in the second arrangement direction (the grating grooves do not have an offset distance in the first arrangement direction); or, offset distances may exist both in the first arrangement direction and the second arrangement direction.

In one preferred implementation of the embodiments of the disclosure, as shown in FIG. 2, the grating grooves 11 between each two adjacent ones of the grating layers 10 are filled with a connecting layer 20, wherein refractive indexes of the grating layers 10 are greater than refractive indexes of the connecting layers 20.

Specifically, the grating layers 10 have higher refractive indexes, and the connecting layers 20 have lower refractive indexes. By connecting the grating layers 10 by means of the connecting layers 20 with lower refractive indexes, high structural stability is ensured, and the diffraction efficiency is improved. The connecting layers 20 can be made of glue.

Preferably, the refractive indexes of the grating layers 10 are 1.5-2.4, and the refractive indexes of the connecting layers 20 are 1-1.49. Specifically, the refractive indexes of the grating layers 10 and the refractive indexes of the connecting layers 20 can be adjusted as needed.

Preferably, the refractive indexes of the respective grating layers 10 are not all the same. Specifically, the refractive indexes of the respective grating layers 10 may be the same or different. Generally, a difference in refractive indexes of the grating layers 10 is 0-0.3. Preferably, the difference in refractive indexes of the grating layers 10 is 0-0.1, for example, the difference in refractive indexes of the grating layers 10 is 0.05.

Preferably, duty cycles of the grating layers 10 are not all the same. Specifically, the duty cycles of the grating layers 10 may be the same or different.

Preferably, depths of the grating grooves 11 in the grating layers 10 are not all the same. Specifically, the depths of the grating grooves 11 in the grating layers 10 may be the same or different.

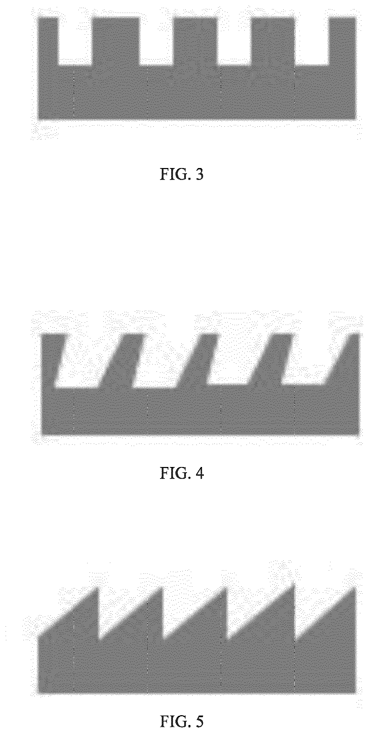

Preferably, as shown in FIGS. 3-7, the grating layers 10 comprise at least one of straight-groove grating layers, slant grating layers, blazed grating layers, step grating layers and curved grating layers.

Specifically, a cross-section of the grating grooves 11 in the straight-groove grating layers is rectangular, and corners of the rectangular grating grooves 11 may have chamfers such as fillets; a cross-section of the grating grooves 11 in the slant grating layers is in the shape of a parallelogram or trapezoid; a cross-section of the grating grooves 11 in the blazed grating layers is triangular; a cross-section of the grating grooves 11 in the step grating layers is step-shaped; a cross-section of the grating grooves 11 in the curved grating layers is in the shape of an arc, which comprises at least one curve, and in a case where the arc comprises multiple curves, the multiple curves are connected in sequence; or, the arc may also comprise straight lines connected with the curves. The shape of the grating grooves 11 may be determined as needed, so that different grating layers 10 can be used.

As shown in FIG. 8, the grating grooves 11 may be circular, oval, square, rectangular, rhombic or the like in shape, or grating protrusions may be in any one of these shapes, and the grating protrusions refer to a plurality of protrusions arranged on the grating.

Preferably, the refractive indexes of the connecting layers 20 are not all the same. Specifically, the refractive indexes of the connecting layers 20 may be the same or different. Generally, a difference in refractive indexes of the connecting layers 20 is 0-0.3. Preferably, the difference in refractive indexes of the connecting layers 20 is 0-0.1.

Preferably, as shown in FIG. 2, the bottommost grating layer 10 is connected with a waveguide substrate 30.

Specifically, the plurality of grating layers 10 may be located above or below the waveguide substrate 30 or located inside the waveguide substrate 30. The plurality of grating layers 10 may be arranged on one or both sides of the waveguide substrate 30.

The stacked grating provided by the disclosure can be used as a coupling-in grating, coupling-out grating, a deflecting grating, or other gratings and will not be limited by the name of the grating. In a case where multiple gratings are formed on the waveguide substrate 30, the respective gratings may be identical or different stacked gratings. The stacked grating provided by the disclosure has no limitation to the direction of a target coupling-out light, that is, a coupling-out light and a coupling-in light may be located on the same side or different sides of an optical waveguide, and the stacked grating can reduce energy of the coupling-out light in non-target directions.

The waveguide substrate 30 comprises at least one of a glass waveguide substrate, a resin waveguide substrate, a plastic waveguide substrate and a transparent ceramic waveguide. The plastic waveguide substrate is, for example, a polymethyl methacrylate (PMMA) waveguide substrate, a polycarbonate (PC) waveguide substrate, or the like.

Preferably, the topmost or bottommost grating layer 10 is connected with a film layer.

Specifically, to improve the optical performance of the stacked grating such as the transflection property, the polarization property, the diffraction efficiency distribution and the mechanical strength, a film layer is arranged on the topmost or bottommost grating layer 10.

The film layer comprises a dielectric film and/or a metal film, the dielectric film is a single-layer dielectric film or a multi-layer dielectric film, and the metal film is a single-layer metal film or a multi-layer metal film. For example, the film layer is a dielectric film, and the dielectric film is located between the waveguide substrate 30 and the grating layer 10 at the bottommost; or, the film layer is a metal film, and the metal film and the waveguide substrate 30 are located on upper and lower sides of the grating layers 10 respectively. Of course, the film layer may comprise both the dielectric film and the metal film. The dielectric film may be of a single-layer or multi-layer construction, and multiple layers of dielectric films form a dielectric film system. The metal film may be of single-layer or multi-layer construction, and multiple layers of metal films form a metal film system.

Based on the stacked grating according to any one of the above embodiments, the disclosure further provides a preferred embodiment of an AR display device.

The AR display device provided by the embodiment of the disclosure comprises an optical engine; at least one layer of optical waveguide (i.e. waveguide substrate 30) located in a light emitting direction of the optical engine; and the stacked grating according to any one of the above embodiments, wherein the stacked grating is arranged on the optical waveguide (i.e. waveguide substrate 30), specifically as described above.

It should be understood that the application of the disclosure is not limited to the above embodiments, those ordinarily skilled in the art can make improvements or transformations according to the above description, and all these improvements and transformations should also fall within the protection scope of the appended claims of the disclosure.

## Claims

1. A stacked grating comprising:
at least two grating layers (10) stacked from bottom to top sequentially;
wherein a plurality of grating grooves (11) is arranged in each of the grating layers (10); and an offset distance exists between the grating grooves (11) in each two adjacent ones of the grating layers (10), and all the offset distances are distributed periodically from bottom to top.

2. The stacked grating according to claim 1, wherein a distance between each two adjacent ones of the grating grooves (11) is a grating period of the two grating grooves (11) in an arrangement direction, and the grating period is 200 nm-1000 nm.

3. The stacked grating according to claim 2, wherein the grating layers (10) are one-dimensional grating layers, and the offset distance is 1-99% of the grating period; or
wherein the grating layers (10) are two-dimensional grating layers, and the offset distance comprises an offset distance in a first arrangement direction and an offset distance in a second arrangement direction; the offset distance in the first arrangement direction is 1-99% of the grating period; the offset distance in the second arrangement direction is 1-99% of the grating period.

4. The stacked grating according to claim 1, wherein the grating grooves (11) between each two adjacent ones of the grating layers (10) are filled with a connecting layer (20), wherein refractive indexes of the grating layers (10) are greater than refractive indexes of the connecting layers (20).

5. The stacked grating according to claim 4, wherein the refractive indexes of the grating layers (10) are 1.5-2.4, and the refractive indexes of the connecting layers (20) are 1-1.49.

6. The stacked grating according to claim 4, wherein the refractive indexes of the respective grating layers (10) are not all the same; and/or,
duty cycles of the grating layers (10) are not all the same; and/or,
depths of the grating grooves (11) in the grating layers (10) are not all the same; and/or,
the refractive indexes of the connecting layers (20) are not all the same.

7. The stacked grating according to any one of claims 1 to 6, wherein the bottommost one of the grating layers (10) is connected with a waveguide substrate (30); and/or,
the topmost or bottommost one of the grating layers (10) is connected with a film layer; and/or,
the grating layers (10) comprise one or more of straight-groove grating layers, slant grating layers, blazed grating layers, step grating layers and curved grating layers; and/or,
each of the grating layers (10) has a thickness of 20nm-1000nm.

8. The stacked grating according to claim 7, wherein the waveguide substrate (30) comprises at least one of a glass waveguide substrate, a resin waveguide substrate, a plastic waveguide substrate, and a transparent ceramic waveguide.

9. The stacked grating according to claim 7, wherein the film layer comprises a dielectric film and/or a metal film, the dielectric film is a single-layer dielectric film or a multi-layer dielectric film, and the metal film is a single-layer metal film or a multi-layer metal film.

10. An AR display device comprising:
an optical engine;
at least one layer of optical waveguide located on a light emitting direction of the optical engine; and
the stacked grating according to any one of claims 1 to 9, wherein the stacked grating is arranged on the optical waveguide.
